# EUROPÄISCHE PATENTSCHRIFT

(11) **EP 2 102 529 B1**
(45) Veröffentlichungstag und Bekanntmachung des Hinweises auf die Patenterteilung: **22.06.2011**
(21) Anmeldenummer: 07819825.6
(22) Anmeldetag: 15.11.2007
(51) Int. Cl.: F16H 61/4026, F16H 61/456, F16H 61/4157

(54) **HYDROSTATISCHER FAHRANTRIEB MIT ZWEI HYDROMOTOREN**
HYDROSTATIC DRIVE HAVING TWO HYDRAULIC MOTORS
SYSTÈME D'ENTRAÎNEMENT HYDROSTATIQUE AVEC DEUX MOTEURS HYDRAULIQUES

(30) Priorität: 15.11.2006 DE 102006053925
(43) Veröffentlichungstag der Anmeldung: 23.09.2009
(73) Patentinhaber: Robert Bosch GmbH, 70442 Stuttgart (DE)
(72) Erfinder: ESSIG, Heinz-Gerhard, 89173 Lonsee (DE)
(74) Vertreter: Beder, Jens
(86) Internationale Anmeldenummer: PCT/EP2007/009884
(87) Internationale Veröffentlichungsnummer: WO 2008/058739

(56) Entgegenhaltungen:
- EP-A- 1 647 720
- DE-A1- 3 431 683
- FR-A- 2 254 987
- US-A- 4 554 991
- US-A- 4 766 727
- US-A- 5 489 007

## Beschreibung

Die Erfindung betrifft einen hydrostatischen Fahrantrieb mit einer Hydropumpe und zwei Hydromotoren in einem hydraulischen Kreislauf.

In hydrostatischen Fahrantrieben zum Antreiben von Nutzfahrzeugen ist es bekannt, einen ersten und einen zweiten Hydromotor in einem geschlossenen hydraulischen Kreislauf mit einer Hydropumpe zu verbinden. Der erste und der zweite Hydromotor sind parallel mit der Hydropumpe verbunden. Ein solcher Antrieb ist aus der DE 199 39 474 A1 bekannt. Dabei ist die Hydropumpe mit einer ersten Arbeitsleitung und einer zweiten Arbeitsleitung verbunden. Die erste Arbeitsleitung verzweigt sich an einem Mengenteiler in eine erste Motorarbeitsleitung und eine zweite Motorarbeitsleitung. Die zweite Arbeitsleitung, die ebenfalls mit der Hydropumpe verbunden ist, verzweigt sich in eine dritte Motorarbeitsleitung und eine vierte Motorarbeitsleitung. Die EP 1647720 offenbart die Merkmale des Oberbegriffes des Anspruches 1.

Gerät das Fahrzeug in einen Schiebebetrieb, so wird unter Beibehaltung der Strömungsrichtung Druckmittel durch die beiden Hydromotoren in dem geschlossenen hydraulischen Kreislauf gefördert. Diebeiden nun als Pumpe wirkenden Hydromotoren stützen sich über die Hydropumpe an einem mit der Hydropumpe verbundenen Antriebsmotor ab. Das so erzeugte Bremsmoment ist dabei abhängig von dem maximal zur Verfügung stehenden Bremsmoment seitens der Antriebsmaschine. Um den in der Regel als Dieselbrennkraftmaschine ausgeführten Antriebsmotor nicht zu überlasten, werden die Förder- bzw. Schluckvolumina der hydrostatischen Kolbenmaschinen so eingestellt, dass die Bremswirkung begrenzt wird. Eine darüber hinausgehende Bremswirkung ist nur durch das Vorsehen einer Betriebsbremse möglich.

Es ist daher die Aufgabe der Erfindung, einen hydrostatischen Antrieb mit einer Hydropumpe und zumindest zwei Hydromotoren zu schaffen, bei dem die hydraulische Bremswirkung nicht auf die Bremsleistung des Antriebsmotors beschränkt ist.

Die Aufgabe wird durch den erfindungsgemäßen hydrostatischen Fahrantrieb mit den Merkmalen des Anspruchs 1 gelöst.

Bei dem erfindungsgemäßen hydrostatischen Fahrantrieb ist eine Hydropumpe mit zumindest einem ersten Hydromotor und einem zweiten Hydromotor in einem hydraulischen Kreislauf verbunden. Der erste Hydromotor und der zweite Hydromotor sind parallel mit der Hydropumpe in dem geschlossenen hydraulischen Kreislauf verbunden. Zwischen den Hydromotoren und der Hydropumpe ist ein Mengenteiler angeordnet. Erfindungsgemäß ist in einer ersten, den Mengenteiler mit der Hydropumpe verbindenden Arbeitsleitung ein Druckbegrenzungsventil angeordnet. Durch dieses Druckbegrenzungsventil wird ein in der ersten Arbeitsleitung entstehender Druck im Schiebebetrieb des Fahrzeugs unter Erzeugung von Wärme entspannt. Der der Pumpe zugeführte Volumenstrom wird damit reduziert, so dass sich infolgedessen auch die Leistungsaufnahme seitens des Antriebsmotors reduziert. Dementsprechend muss eine geringere Bremsleistung durch den Antriebsmotor aufgebracht werden bzw. umgekehrt, die Gesamtbremswirkung wird durch die Teilung des Volumenstroms durch das Druckbegrenzungsventil erhöht. Die freiwerdende kinetische Energie wird dabei in Wärme umgewandelt.

In den Unteransprüchen sind vorteilhafte Weiterbildungen des erfindungsgemäßen hydrostatischen Fahrantriebs ausgeführt.

Insbesondere ist es vorteilhaft, das Druckbegrenzungsventil in einer die erste mit der zweiten Arbeitsleitung verbindenden Kurzschlussleitung anzuordnen.

Die Anordnung in einer solchen Kurzschlussleitung hat den Vorteil, dass der aus der Arbeitsleitung abgezweigte Volumenstrom der Saugseite der Hydromotoren wieder zugeführt wird. Somit wird der gesamte, durch die beiden Hydromotoren geförderte Volumenstrom in einen Volumenstrom, der der Hydropumpe zugeführt wird, und in einen Volumenstrom der an der Hydropumpe vorbei auf die Eingangsseite der Hydromotoren geführt wird geteilt. Damit kann ein Nachfördern von Druckmittel entfallen, wie es beispielsweise erforderlich wäre, wenn das zur Erzeugung der Bremswirkung über das Druckbegrenzungsventil entspannte Druckmittel in ein Tankvolumen abgeführt würde.

Weiterhin ist es vorteilhaft, zwischen dem Druckbegrenzungsventil und der zweiten Arbeitsleitung ein Rückschlagventil vorzusehen, welches in Richtung auf die zweite Arbeitsleitung hin öffnet. Ein solches Rückschlagventil hat den Vorteil, dass im Falle einer normalen Fahrt, bei der in der zweiten Arbeitsleitung der Förderdruck der Hydropumpe anliegt, eine Beaufschlagung des Druckbegrenzungsventils mit diesem Förderdruck nicht erfolgt.

Der Mengenteiler verbindet vorzugsweise den ersten Arbeitsleitungszweig und den zweiten Arbeitsleitungszweig jeweils über eine steuerbare Drosselstelle mit der ersten Arbeitsleitung. Somit kann zusätzlich durch die Bremswirkung, die durch das Druckbegrenzungsventil erzeugt wird, eine zusätzliche Bremswirkung unmittelbar durch den Mengenteiler erzeugt werden. Der Mengenteiler ist dazu mit einem ersten Steuersignal beaufschlagbar, so dass die Drosselwirkung des Mengenteilers in Abhängigkeit von diesem ersten Steuersignal einstellbar ist. Das erste Steuersignal wird vorzugsweise durch eine elektronische Steuereinheit erzeugt. Dabei berücksichtigt die elektronische Steuereinheit beispielsweise eine Bremspedalstellung oder eine Bremspedalkraft.

Weiterhin wird es bevorzugt, wenn der Öffnungsdruck des Druckbegrenzungsventils in Abhängigkeit eines zweiten Steuersignals einstellbar ist. Somit wird keine starre Einstellung des Druckbegrenzungsventils zur Erzeugung der zusätzlichen Bremswirkung an dem Druckbegrenzungsventil vorgesehen. In Abhängigkeit von der jeweils vorhandenen Betriebssituation kann also die Bremswirkung über die Entspannung von Druckmittel mittels des Druckbegrenzungsventils situationsgerecht angepasst werden. Damit kann beispielsweise im Falle von zu hoher auftretender Wärmeentwicklung an dem Drosselventil und der damit verbundenen unerwünschten Erwärmung des Druckmittels die Bremswirkung reduziert werden. Die Verteilung des Volumenstroms über die Hydropumpe bzw. das Druckbegrenzungsventil können somit eingestellt werden.

Die Hydropumpe ist vorzugsweise in ihrem Fördervolumen einstellbar, wobei das Fördervolumen in Abhängigkeit von einem Bremssignal in Richtung eines minimalen Fördervolumens verstellbar ist. Die Hydropumpe in Kombination mit dem Antriebsmotor erzeugt ein umso höheres Bremsmoment, je kleiner das eingestellte Fördervolumen der Hydropumpe ist. Dementsprechend kann durch die Einstellung des Fördervolumens während eines Bremsvorgangs mit zunehmendem Bremssignal in Richtung des minimalen Fördervolumens die Bremswirkung erhöht werden.

Das Fördervolumen der Hydropumpe ist dabei durch eine Verstellvorrichtung einstellbar, die von einem elektronischen Steuergerät ansteuerbar ist.

Vorzugsweise sind auch der erste Hydromotor und der zweite Hydromotor in ihrem Schluckvolumen einstellbar. Dazu wirkt mit dem ersten Hydromotor eine erste Motorverstellvorrichtung und mit dem zweiten Hydromotor eine zweite Motorverstellvorrichtung zusammen. Die erste Motorverstellvorrichtung und die zweite Motorverstellvorrichtung sind ebenfalls vorzugsweise von einem elektronischen Steuergerät ansteuerbar. Dabei wird das Schluckvolumen der beiden Hydromotoren insbesondere mit zunehmendem Bremssignal, also zunehmendem Verzögerungswunsch, in Richtung größerer Schluckvolumina verstellt. Die als Hydropumpen wirkenden Hydromotoren fördern somit bei konstanter Fahrzeuggeschwindigkeit einen zunehmend größeren Volumenstrom.

Vorzugsweise ist zwischen der Verbindung des Druckbegrenzungsventils mit der ersten Arbeitsleitung und der Pumpe eine Spülvorrichtung angeordnet. Mit Hilfe der Spülvorrichtung wird folglich aus dem bereits reduzierten Volumenstrom ein weiterer Teilvolumenstrom entnommen, so dass ohne einen Einfluss auf die Bremsleistung, die durch das Druckbegrenzungsventil erreicht wird, der der Hydropumpe zugeführte Volumenstrom im Verzögerungsfall noch weiter reduziert wird.

Ein bevorzugtes Ausführungsbeispiel ist in der Zeichnung vereinfacht dargestellt und wird in der nachfolgenden Beschreibung näher erläutert. Es zeigt:

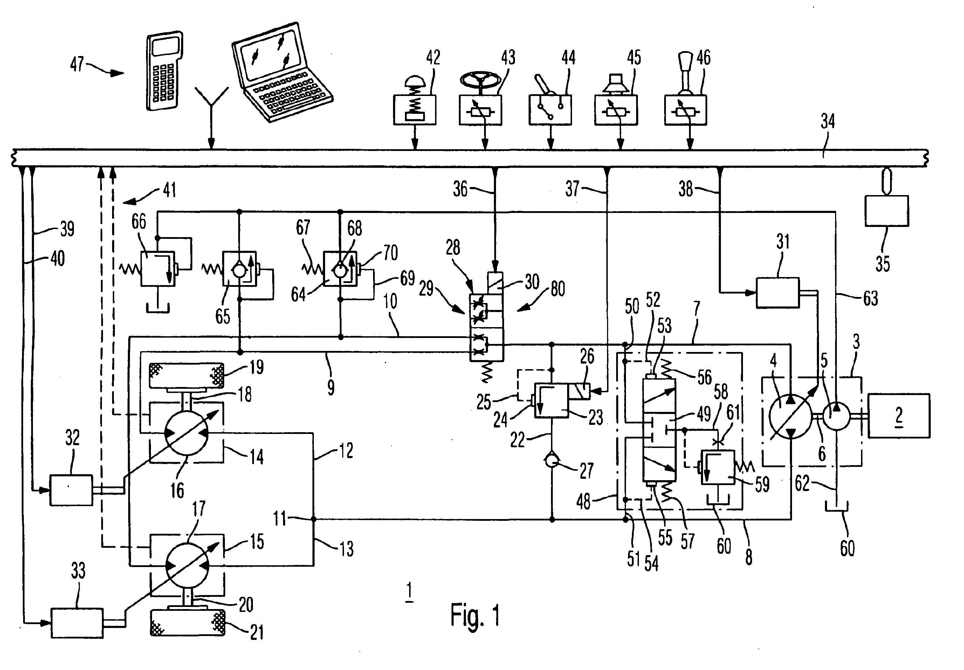

- Fig. 1: einen hydraulischen Schaltplan eines erfindungsgemäßen hydrostatischen Fahrantriebs.

In der Fig. 1 ist ein erfindungsgemäßer hydrostatischer Fahrantrieb 1 dargestellt. Der hydrostatische Fahrantrieb 1 umfasst als primäre Antriebsquelle einen Antriebsmotor 2, der in der Regel als Dieselbrennkraftmaschine ausgeführt wird. Der Antriebsmotor 2 ist mit einer Hydropumpeneinheit 3 verbunden.

Die Hydropumpeneinheit 3 umfasst eine Hydropumpe 4 sowie eine Speisepumpe 5. Die Hydropumpe 4 und die Speisepumpe 5 sind über eine Antriebswelle 6 miteinander und mit dem Antriebsmotor 2 gekoppelt. Die Hydropumpe 4 ist eine zur Förderung in zwei Richtungen ausgelegte, in ihrem Fördervolumen einstellbare Hydropumpe. Die Speisepumpe 5 ist als Konstantpumpe ausgeführt und zur Förderung lediglich in eine Richtung vorgesehen.

Das von der Hydropumpe 4 geförderte Druckmittel wird in Abhängigkeit von der jeweiligen Förderrichtung in eine erste Arbeitsleitung 7 oder in eine zweite Arbeitsleitung 8 gefördert. Die erste Arbeitsleitung 7 verzweigt sich an einem Mengenteiler 80 in eine erste Motorarbeitsleitung 9 und eine zweite Motorarbeitsleitung 10. Die zweite Arbeitsleitung 8 verzweigt sich an einer Verzweigungsstelle 11 in eine dritte Motorarbeitsleitung 12 und eine vierte Motorarbeitsleitung 13.

Die erste Motorarbeitsleitung 9 und die dritte Motorarbeitsleitung 12 sind mit einer ersten Hydromotoreinheit 14 verbunden. Entsprechend sind die zweite Motorarbeitsleitung 10 und die vierte Motorarbeitsleitung 13 mit einer zweiten Hydromotoreinheit 15 verbunden. Die erste Hydromotoreinheit 14 umfasst einen hinsichtlich seines Schluckvolumens einstellbaren Hydromotor 16. Dementsprechend umfasst die zweite Hydromotoreinheit 15 einen zweiten Hydromotor 17, der ebenfalls hinsichtlich seines Schluckvolumens einstellbar ist.

Der erste Hydromotor 16 ist über eine erste Abtriebswelle 18 mit einem ersten angetriebenen Rad 19 verbunden. In entsprechender Weise ist über eine zweite Abtriebswelle 20 der zweite Hydromotor 17 mit einem zweiten angetriebenen Rad 21 verbunden. Das erste angetriebene Rad 19 und das zweite angetriebene Rad 21 können beispielsweise jeweils einer Fahrzeugseite derselben Fahrzeugachse zugeordnet sein.

Die erste Arbeitsleitung 7 und die zweite Arbeitsleitung 8 sind über eine Kurzschlussleitung 22 miteinander verbunden. In der Kurzschlussleitung 22 ist ein Druckbegrenzungsventil 23 angeordnet. An einer ersten Messfläche 24 wirkt auf das Druckbegrenzungsventil 23 der in der ersten Arbeitsleitung 7 herrschende Druck. Dieser in der Arbeitsleitung 7 herrschende Druck wird der ersten Messfläche 24 über eine erste Messleitung 25 zugeführt. Die hydraulische Kraft, die an der ersten Messfläche 24 erzeug wird, beaufschlagt das Druckbegrenzungsventil 23 in Richtung seiner geöffneten Position. In der geöffneten Position des Druckbegrenzungsventils 23 ist eine durchströmbare Verbindung der ersten Arbeitsleitung 7 mit der zweiten Arbeitsleitung 8 durch die Kurzschlussleitung 22 hergestellt. Reicht dagegen die hydraulische Kraft, die an der Messfläche 24 erzeugt wird, nicht aus, um das Druckbegrenzungsventil 23 in seine geöffnete Position zu bringen, so wird durch das Druckbegrenzungsventil 23 die Kurzschlussleitung 22 unterbrochen.

In dem dargestellten Ausführungsbeispiel wird der Öffnungsdruck allein mit Hilfe eines Elektromagneten 26 eingestellt. Der Elektromagnet 26 ist vorzugsweise als Proportionalmagnet ausgeführt, so dass entsprechend einem zugeführten Strom der Öffnungsdruck des Druckbegrenzungsventils 23 eingestellt werden kann. Bei einer Vorwärtsfahrt wird durch die Hydropumpe 4 Druckmittel in die zweite Arbeitsleitung 8 gefördert. Das in die zweite Arbeitsleitung 8 geförderte Druckmittel teilt sich in die dritte Motorarbeitsleitung 12 und die vierte Motorarbeitsleitung 13 auf. Unter Abbau des Förderdrucks wird durch die Hydromotoren 16, 17 ein Abtriebsmoment an den Abtriebswellen 18, 20 erzeugt. Das während eines normalen Fahrbetriebs nunmehr nahezu drucklose Druckmittel strömt über die erste Motorarbeitsleitung 9 und die zweite Motorarbeitsleitung 10 zu dem Mengenteiler 80. Der Mengenteiler 80 ist in diesem Fall stromabwärts der Hydromotoren 16, 17 angeordnet. Der Mengenteiler 80 wirkt dabei als Summierer und summiert die beiden Volumenströme der ersten Motorarbeitsleitung 9 und der zweiten Motorarbeitsleitung 10. Dieser summierte Volumenstrom wird in die erste Arbeitsleitung 7 weitergeleitet und strömt dort in Richtung zu der Hydropumpe 4 hin.

Gerät ein solchermaßen bei Vorwärtsfahrt angetriebenes Fahrzeug nun in den Schiebebetrieb oder wird eine Verzögerung durch den Bediener vorgegeben, so kehren sich die Druckverhältnisse in den Leitungen um. Die erste Arbeitsleitung 7 wird somit über dem Mengenteiler 80 und die erste Motorarbeitsleitung 9 und die zweite Motorarbeitsleitung 10 mit Druckmittel bedrückt. Dieses Druckmittel wird durch die erste Hydropumpe 16 und die zweite Hydropumpe 17 gefördert, die aufgrund der Massenträgheit des Fahrzeugs nunmehr als Pumpe wirken. Die Druckerhöhung führt zu einer erhöhten hydraulischen Kraft an der ersten Messfläche 24 des Druckbegrenzungsventils 23. Übersteigt die so erzeugte Kraft, die nur bei im Schiebebetrieb oder bei einem Bremsvorgang auftritt, den durch den Elektromagneten 26 eingestellten Öffnungsdruck, so öffnet das Druckbegrenzungsventil 23. Infolge der Öffnung des Druckbegrenzungsventils 23 wird eine gedrosselt durchströmbare Verbindung in der Kurzschlussleitung 22 hergestellt und aus der ersten Arbeitsleitung 7 wird ein Teilvolumenstrom entnommen und der zweiten Arbeitsleitung 8 zugeführt.

Um während eines normalen Fahrbetriebs in Vorwärtsrichtung zu verhindern, dass Druckmittel, welches von der Hydropumpe 4 in die zweite Arbeitsleitung 8 gefördert wird, das Druckbegrenzungsventil 23 beaufschlagt, ist in der Kurzschlussleitung 22 ein Rückschlagventil 27 angeordnet. Das Rückschlagventil 27 ist zwischen dem Druckbegrenzungsventil 23 und der zweiten Arbeitsleitung 8 angeordnet und öffnet in Richtung auf die zweite Arbeitsleitung 8 hin.

In dem dargestellten Ausführungsbeispiel ist der Öffnungsdruck des Druckbegrenzungsventils 23 mittels des als Proportionalmagneten ausgeführten Elektromagneten 26 einstellbar. Ebenso ist jedoch auch der Öffnungsdruck des Druckbegrenzungsventils 23 mit Hilfe einer Einstellfeder einstellbar, so dass jeweils bei einem vorgegebenen festen Öffnungsdruck in der ersten Arbeitsleitung 7 das Druckbegrenzungsventil 23 öffnet.

In dem dargestellten Ausführungsbeispiel ist der Mengenteiler 80 als 3/-2-Wegeventil ausgeführt. Die Anschlüsse des Mengenteilers 80 mit der ersten Motorarbeitsleitung 9 und der zweiten Motorarbeitsleitung 10 weisen jeweils eine einstellbare Drosselstelle 28, 29 auf. Die Drosselstellen 28, 29 sind in Abhängigkeit von einem ersten Steuersignal einstellbar. Das erste Steuersignal bzw. ein dem Steuersignal entsprechender Steuerstrom wird ebenfalls einem Elektromagneten 30, über den der Mengenteiler 80 betätigt wird, zugeführt. Damit kann zusätzlich zu der Bremswirkung, die durch den Antriebsmotor 2 erzeugt wird, sowie durch die Bremswirkung des Druckbegrenzungsventils 23 auch in dem Mengenteiler 80 eine Bremswirkung durch Drosselung des Volumenstroms durch den Mengenteiler 80 erzeugt werden.

Zur Einstellung des Fördervolumens der Hydropumpe 4 ist eine Verstellvorrichtung 31 vorgesehen. Die Verstellvorrichtung 31 wirkt mit einem Verstellmechanismus der Hydropumpeneinheit 3 zusammen, die die Förderrichtung sowie die Fördermenge der Hydropumpe 4 einstellt.

In dem dargestellten Ausführungsbeispiel sind vorzugsweise auch die beiden Hydromotoren 16, 17 in ihrem Schluckvolumen einstellbar. Hierzu ist eine erste Motorverstellvorrichtung 32 und eine zweite Motorverstellvorrichtung 33 vorgesehen, die auf die jeweiligen Stellmechanismen der Hydromotoreinheiten 14 und 15 wirken.

Zur Ansteuerung der Verstellvorrichtungen 31 und der Motorverstellvorrichtungen 32 und 33 sind diese mit einem Bussystem 34 verbunden. Mit dem Bussystem 34 ist ferner eine elektronische Steuereinheit 35 verbunden. Die elektronische Steuereinheit 35 erzeugt ein erstes Steuersignal, welches über eine erste Steuersignalleitung 36 dem Elektromagneten 36 zugeführt wird. Ferner wird durch die elektronische Steuereinheit 35 ein zweites Steuersignal erzeugt, welches über die zweite Steuersignalleitung 37 dem Elektromagneten 26 zugeführt wird. Ein drittes Steuersignal wird über eine dritte Steuersignalleitung 38 der Verstellvorrichtung 31 zugeführt. Ein viertes und fünftes Steuersignal wird ebenfalls durch die elektronische Steuereinheit 35 erzeugt und über eine vierte bzw. fünfte Steuersignalleitung 39, 40 der ersten Motorverstellvorrichtung 32 bzw. der zweiten Motorverstellvorrichtung 33 zugeführt. Die Steuerleitungen 36 bis 40 verbinden damit mittels des Bussystems 34 die Elektromagneten 26, 30 sowie die Verstellvorrichtung 31 und die Motorverstellvorrichtung 32, 33 mit der elektronischen Steuereinheit 35.

Die elektronische Steuereinheit 35 erzeugt die Steuersignale in Abhängigkeit von Bedienereingaben. Zur Eingabe eines Fahrtwunsches gibt der Bediener über verschiedene Bedienelemente 42 bis 46 beispielsweise eine Richtung, einen Beschleunigungs- oder Fahrtrichtungswunsch vor. Die Bedienelemente umfassen z.B. einen Notausschalter 42, ein Lenkrad 43, dessen Position elektronisch erfasst wird, einen Fahrbereichsschalter 34 und einen Fahrhebel 46. Beispielhaft ist noch eine weitere Eingabevorrichtung 45 dargestellt.

Ferner werden über das Bussystem 34 an die elektronische Steuereinheit 35 Istdaten der Hydromotoreinheit 14 und 15 übermittelt. Die Hydromotoreinheiten 14 und 15 sind hierzu über Istsignalleitungen 41 mit dem Bussystem 34 verbunden. Die Istsignalleitungen 41 dienen beispielsweise der Übermittlung von Drehzahlsignalen oder Betriebstemperaturen der Hydromotoreinheiten 14, 15.

Ausgehend von einem normalen Fahrbetrieb in Vorwärtsrichtung, bei dem durch Hydropumpe 4 Druckmittel in die zweite Arbeitsleitung 8 gefördert wird, wird beispielsweise durch einen Bediener die Auslenkung des Fahrhebels 46 zurückgenommen. Übersteigt die Rücknahme des Fahrhebels 46 die Verzögerung des Fahrzeugs aufgrund der inneren Reibung, so wird das Fahrzeug aktiv abgebremst. Auf Basis der Positionsänderung des Fahrhebels 46 wird ein Bremssignal ermittelt und an die elektronische Steuereinheit 35 übermittelt. Ein Bremssignal kann beispielsweise auch durch Betätigen eines Fußpedals, beispielsweise eines Bremspedals, durch einen Fahrzeugbediener erzeugt werden.

In Abhängigkeit von der Stärke des Bremssignals wird nun zur Verzögerung des Fahrzeugs die Hydropumpe 4 in Richtung kleiner werdenden Fördervolumens verstellt. Gleichzeitig werden vorzugsweise die beiden Hydromotoren 16 und 17 durch die Motorverstellvorrichtungen 32 und 33 in Richtung ihres maximalen Schluckvolumens ausgelenkt. Somit wird aufgrund der Massenträgheit des Fahrzeugs durch die beiden Hydromotoren 16, 17 ein großer Volumenstrom erzeugt und in die erste Motorarbeitsleitung 9 bzw. die zweite Motorarbeitsleitung 10 gefördert. In dem dargestellten Ausführungsbeispiel, bei dem sowohl das Druckbegrenzungsventil 23 als auch der Mengenteiler 80 ansteuerbar sind, wird durch die elektronische Steuereinheit 35 ein erstes Steuersignal und ein zweites Steuersignal erzeugt. Mit dem ersten Steuersignal wird der Elektromagnet 33 beaufschlagt, so dass eine Stellkraft auf dem Mengenteiler 80 erzeugt wird. Diese Stellkraft führt zu einer Erhöhung der Drosselwirkung durch die verstellbaren Drosseln 28 und 29. Entgegen der Kraft einer Rückstellfeder wird das 3/2-Wegeventil in Richtung seiner in der Fig. 1 dargestellten oberen Position verstellt.

Gleichzeitig wird der Elektromagnet 26 des Druckbegrenzungsventils 23 dem zweiten Steuersignal entsprechend bestromt und damit ein bestimmter Öffnungsdruck des Druckbegrenzungsventils 23 eingestellt. Die gewünschte Bremswirkung ergibt sich folglich durch die Entnahme von Druckmittel aus der ersten Arbeitsleitung 7 und die Entspannung über das Druckbegrenzungsventil 23, wobei durch das Entspannen des Druckmittels über das Druckbegrenzungsventil 23 kinetische Energie in Wärme umgewandelt wird. Ebenfalls wird an den beiden steuerbaren Drosselstellen 28 und 29 des Mengenteilers 80 kinetische Energie in Wärme umgewandelt.

Eine zusätzliche Bremswirkung wird durch die Hydropumpe 4 erzielt, die über die erste Arbeitsleitung 7 mit Druckmittel beaufschlagt wird. Die Hydropumpe 4, die auf kleineres Fördervolumen verstellt wurde, um eine Bremswirkung zu erzielen, stützt sich an der Antriebsmaschine 2 ab.

Anstelle der in dem dargestellten Ausführungsbeispiel erzeugten Drosselwirkung an dem Mengenteiler 80 kann auch auf eine Drosselwirkung dort verzichtet werden. Die Reduzierung des durch den Antriebsmotor 2 aufzubringenden Bremsmoments wird dann allein durch die Reduzierung des durch die Hydropumpe 4 gebildeten Volumenteilstroms durch das Druckbegrenzungsventil 23 erreicht. Auch in diesem Fall kann entweder eine variable Einstellung des Öffnungsdrucks oder eine feste Einstellung mit Hilfe einer Feder vorgesehen sein.

Anstelle der in dem dargestellten, bevorzugten Ausführungsbeispiel verwendeten variablen Hydromotoren 16, 17, können auch Konstantmotoren eingesetzt werden. In diesem Fall entfällt die Verstellung der Hydromotoren 16, 17 auf ihr maximales Fördervolumen zum Erreichen einer besonders großen Bremswirkung.

Durch die Verwendung des Druckbegrenzungsventils 23 als Bremsventil wird sichergestellt, dass nur dann, wenn sich die Druckverhältnisse bei Vorwärtsfahrt in den hydraulischen Kreislauf umkehren, das Druckbegrenzungsventil 23 anspricht. Sofern eine normale Vorwärtsfahrt vorliegt, ist die erste Arbeitsleitung 7 weitgehend drucklos und das Druckbegrenzungsventil 23 spricht nicht an.

Im Falle einer Rückwärtsfahrt muss der Öffnungsdruck des Druckbegrenzungsventils 23 so eingestellt sein, dass während eines normalen Rückwärtsfahrbetriebs, bei dem die erste Arbeitsleitung 7 durch die Hydropumpe 4 bedrückt wird, der Arbeitsleitungsdruck unterhalb des Öffnungsdrucks liegt. Im Falle einer variablen Einstellung des Öffnungsdrucks des Druckbegrenzungsventils 23 kann dies durch ein entsprechendes zweites Steuersignal sichergestellt werden. Infolgedessen wird der Elektromagnet 26 so eingestellt, dass ein hoher Öffnungsdruck des Druckbegrenzungsventils 23 eingestellt ist.

Auf die Einstellungen und Kennlinien zur Ansteuerung des Mengenteilers 80, des Druckbegrenzungsventils 23 sowie der Verstellvorrichtungen 31 bis 33 kann über das Bussystem 34 mittels Serviceeinrichtungen 47 auf die elektronische Steuereinheit 35 zugegriffen werden. Ebenso ist über die Servicegeräte 47 ein Auslesen von etwaigen Fehlermeldungen aus einem Fehlerspeicher möglich.

Sowohl während des normalen Fahrbetriebs, als auch insbesondere während des Bremsvorgangs wird das Druckmittel in dem geschlossenen hydraulischen Kreislauf erwärmt. Um ein Überhitzen des Druckmittels zu vermeiden, wird aus dem geschlossenen hydraulischen Kreislauf gezielt Druckmittel entnommen. Dieses Druckmittel kann beispielsweise über einen Kühler in ein externes Tankvolumen abgeführt werden.

Hierzu ist eine Spülvorrichtung 48 vorgesehen. Die Spülvorrichtung 48 weist ein Spülventil 49 auf, das als 3/3-Wegeventil ausgeführt ist. Das Spülventil 49 weist zwei Eingangsanschlüsse auf. Der erste Eingangsanschluss ist über eine erste Entnahmeleitung 50 mit der ersten Arbeitsleitung 7 verbunden. Der zweite Eingangsanschluss ist über eine zweite Entnahmeleitung 51 mit der zweiten Arbeitsleitung 8 verbunden. Der Druck, der in der ersten Arbeitsleitung 7 herrscht wird über eine erste Vergleichsleitung 52 einer ersten Messfläche 53 zugeführt. Entsprechend wird der Druck der zweiten Arbeitsleitung 8 über eine zweite Vergleichsleitung 54 einer zweiten, entgegengesetzt wirkenden Messfläche 55 zugeführt. Ferner wird das Spülventil 49 durch eine erste Zentrierfeder 54 und eine zweite Zentrierfeder 57 in seiner, in der Fig. 1 dargestellten Mittelposition gehalten. In der Mittelposition sind die beiden Eingangsanschlüsse und ein Ausgangsanschluss des Spülventils 49 voneinander getrennt. Das Spülventil 49 ist mit denjenigen Abschnitten der Arbeitsleitungen 7, 8 verbunden, die zwischen der Kurzschlussleitung 22 und der Hydropumpe 4 liegen.

Aufgrund einer sich in den Arbeitsleitungen 7, 8 ergebenden Druckdifferenz wird das Spülventil 49 ausgehend aus seiner Mittelposition in Richtung einer ersten oder einer zweiten Endposition ausgelenkt. Ist der Druck, wie dies während einer normalen Vorwärtsfahrt üblich ist, in der zweiten Arbeitsleitung 8 größer als in der ersten Arbeitsleitung 7, so übersteigt die hydraulische Kraft an der zweiten Messfläche 55 die hydraulische Kraft an der entgegengesetzt wirkenden ersten Messfläche 53.

Das Spülventil 49 wird dadurch in eine erste Endposition ausgelenkt. In der ersten Endposition wird die erste Entnahmeleitung 50 mit einer Spülleitung 58 verbunden. Die Spülleitung 58 verbindet den Ausgangsanschluss des Spülventils 49 mit einem Tankvolumen 60. In der Spülleitung 58 ist ein Druckhalteventil 59 vorgesehen, welches sicherstellt, dass unterhalb eines gewissen Mindestdrucks eine Entnahme von Spülöl nicht erfolgt. Stromaufwärts des Halteventils 59 ist eine Drosselstelle 61 angeordnet, die der Begrenzung der entnommenen Spülmittelmenge dient. Das Halteventil 59 ist ein federbelastetes Druckbegrenzungsventil, wobei auf eine entgegen der Feder wirkende Halteventilmessfläche der stromaufwärts der Drosselstelle 61 in der Spülleitung 58 herrschende Druck wirkt.

Bei einer Druckumkehrung in der ersten Arbeitsleitung 7 und der zweiten Arbeitsleitung 8 kehren sich die Kraftverhältnisse an der ersten und der zweiten Messfläche 53 und 54 um. Infolgedessen übersteigt die Kraft an der ersten Messfläche 53 die Kraft an der zweiten Messfläche 55. Das Spülventil 49 wird in seine zweite Endposition gebracht, in der die zweite Entnahmeleitung 51 mit der Spülleitung 58 verbunden ist.

Zum Nachfördern von aus dem hydraulischen Kreislauf entnommenem Druckmittel ist eine Speiseeinrichtung vorgesehen. Die Speiseeinrichtung umfasst die Speisepumpe 5, die aus dem Tankvolumen 60 über eine Saugleitung 62 Druckmittel ansaugt. Das angesaugte Druckmittel wird durch die Speisepumpe 5 in eine Speisedruckleitung 63 gefördert. Die Speisedruckleitung 63 ist über eine erste Speiseventileinrichtung 65 mit der ersten Motorarbeitsleitung 9 verbunden. Ebenso ist die Speisedruckleitung 63 über eine zweite Speiseventileinheit 64 mit der zweiten Motorarbeitsleitung 10 verbunden. Zur Erzeugung eines konstanten Speisedrucks oberhalb einer Mindestdrehzahl der als Konstantpumpe ausgeführten Speisepumpe 5 ist ein Speisedruckbegrenzungsventil 66 vorgesehen. Das Speisedruckbegrenzungsventil 66 öffnet ab einem bestimmten, festgelegten Speisedruck in der Speisedruckleitung 63 und entspannt die Speisedruckleitung 63 in das Tankvolumen 60.

Die erste Speiseventileinheit 65 und die zweite Speiseventileinheit 64 sind identisch aufgebaut. Um unnötige Wiederholungen zu vermeiden, wird daher nachfolgend lediglich der Aufbau der zweiten Speiseventileinheit 64 näher erläutert.

Über die zweite Speiseventileinheit 64 ist die Speisedruckleitung 63 mit der zweiten Motorarbeitsleitung 10 verbunden. Die zweite Speiseventileinheit 64 weist dabei ein Rückschlagventil 68 auf, welches in Richtung auf die zweite Motorarbeitsleitung 10 hin öffnet. Übersteigt der Druck in der Speisedruckleitung 63 den Druck in der zweiten Motorarbeitsleitung 10, so öffnet das Rückschlagventil und Druckmittel wird aus der Speisedruckleitung 63 in die Motorarbeitsleitung 10 zugeführt. Liegt dagegen in der zweiten Motorarbeitsleitung 10 ein höherer Druck vor, so geht das Rückschlagventil 68 in seine geschlossene Position. Ein unbeabsichtigter Druckmittelverlust aus der Motorarbeitsleitung 10 in das Speisesystem wird somit verhindert. Die Speiseventileinheit 64 weist ferner ein integriertes Druckbegrenzungsventil auf, welches aufgrund einer Speiseventilfeder in seiner geschlossenen Position gehalten wird. Entgegen der Kraft der Speiseventilfeder 67 wirkt eine hydraulische Kraft, die an einer Speiseventilmessfläche 70 angreift. Die hydraulische Kraft an der Speiseventilmessfläche 70 wird durch einen Druck in der zweiten Motorarbeitsleitung 10 erzeugt. Hierzu ist die Speiseventilmessfläche 70 über eine Speiseventilmessleitung 69 mit der zweiten Motorarbeitsleitung 10 verbunden. Mittels der Speiseventilfeder 67 kann somit eine Absicherung der zweiten Motorarbeitsleitung 10 erfolgen. Die zweite Speiseventilfeder 67 legt den Öffnungsdruck der Speiseventileinheit 64 fest. Übersteigt der Druck in der zweiten Motorarbeitsleitung 10 den eingestellten kritischen Wert, so öffnet die zweite Speiseventileinheit 64 und gibt entgegen dem geschlossenen Rückschlagventil 68 einen Strömungsweg aus der zweiten Motorarbeitsleitung 10 in die Speisedruckleitung 63 frei.

Sofern der Druck in der ersten Motorarbeitsleitung 9 niedriger ist als der durch das Speisedruckbegrenzungsventil 66 eingestellte Druck, wird das entnommene Druckmittel der zweiten Motorarbeitsleitung 10 der ersten Motorarbeitsleitung 9 zugeführt. Ist dagegen auch in der ersten Motorarbeitsleitung 9 der Druck höher als der durch das Speisedruckbegrenzungsventil 66 eingestellte Druck, so öffnet das Speisedruckbegrenzungsventil 66 und entspannt die Speisedruckleitung 63 und somit letztlich die zweite Motorarbeitsleitung 10 in das Tankvolumen 60.

Die Erfindung ist nicht auf das dargestellte Ausführungsbeispiel beschränkt. Insbesondere sind einzelne Merkmale, wie dies bereits in der Beschreibung erläutert wurde, miteinander kombinierbar. So ist anstelle einer Erzeugung von Steuersignalen sowohl für den Mengenteiler 80 als auch für das Druckbegrenzungsventil 23 auch denkbar, lediglich den Mengenteiler 80 oder das Druckbegrenzungsventil 23 ansteuerbar auszuführen. Ferner kann auch eine direkte Verbindung zwischen dem elektronischen Steuergerät 35 und dem ansteuernden Ventil vorgesehen sein. Ein Bussystem 34 ist nicht erforderlich.

## Patentansprüche

1. Hydrostatischer Fahrantrieb mit einer Hydropumpeneinheit (3) und zumindest einer ersten Hydromotoreinheit (14) und einer zweiten Hydromotoreinheit (15), die parallel mit der Hydropumpeneinheit (3) in einem geschlossenen hydraulischen Kreislauf verbunden sind, wobei zwischen den Hydromotoreinheiten (14, 15) und der Hydropumpeneinheit (3) ein Mengenteiler (80) angeordnet ist, wobei ein Druckbegrenzungsventil (23)
mit einer den Mengenteiler (80) mit der Hydropumpeneinheit (3) verbindenden ersten Arbeitsleitung (7) verbunden ist, **dadurch gekennzeichnet, dass** ein Öffnungsdruck des Druckbegrenzungsventils (23) in Abhängigkeit von einem Steuersignal einstellbar ist.

2. Hydrostatischer Fahrantrieb nach Anspruch 1,
**dadurch gekennzeichnet,**
**dass** das Druckbegrenzungsventil (23) in einer die erste Arbeitsleitung (7) mit einer zweiten Arbeitsleitung (8) verbindenden Kurzschlussleitung (22) angeordnet ist.

3. Hydrostatischer Fahrantrieb nach Anspruch 2,
**dadurch gekennzeichnet,**
**dass** zwischen dem Druckbegrenzungsventil (23) und der zweiten Arbeitsleitung (8) ein in Richtung auf die zweite Arbeitsleitung (8) hin öffnendes Rückschlagventil (27) angeordnet ist.

4. Hydrostatischer Fahrantrieb nach einem der Ansprüche 1 bis 3,
**dadurch gekennzeichnet,**
**dass** der Mengenteiler (80) einen ersten Motorarbeitsleitungszweig (9) und einen zweiten Motorarbeitsleitungszweig (10) über jeweils eine steuerbare Drosselstelle (28, 29) mit der ersten Arbeitsleitung (7) verbindet.

5. Hydrostatischer Fahrantrieb nach Anspruch 4,
**dadurch gekennzeichnet,**
**dass** die Drosselstellen (28, 29) des Mengenteilers (80) in ihrer Drosselwirkung in Abhängigkeit von einem weiteren Steuersignal einstellbar sind.

6. Hydrostatischer Fahrantrieb nach einem der Ansprüche 1 bis 5,
**dadurch gekennzeichnet,**
**dass** die Hydropumpeneinheit (3) in ihrem Fördervolumen einstellbar ist, wobei das Fördervolumen in Abhängigkeit von einem Bremssignal in Richtung eines minimalen Fördervolumens einstellbar ist.

7. Hydrostatischer Fahrantrieb nach Anspruch 6,
**dadurch gekennzeichnet,**
**dass** das Fördervolumen der Hydropumpeneinheit (3) durch eine Verstellvorrichtung (31) einstellbar ist, die von einem elektronischen Steuergerät (35) ansteuerbar ist.

8. Hydrostatischer Fahrantrieb nach einem der Ansprüche 1 bis 7,
**dadurch gekennzeichnet,**
**dass** die erste Hydromotoreinheit (14) und die zweite Hydromotoreinheit (15) über eine erste Motorverstellvorrichtung (32) bzw. eine zweite Motorverstellvorrichtung (33) in ihrem Schluckvolumen einstellbar sind, wobei die erste Motorverstellvorrichtung (32) und die zweite Motorverstellvorrichtung (33) von einem elektronischen Steuergerät (35) ansteuerbar sind.

9. Hydrostatischer Fahrantrieb nach einem der Ansprüche 1 bis 8,
**dadurch gekennzeichnet,**
**dass** zwischen der Verbindung des Druckbegrenzungsventils (23) mit der ersten Arbeitsleitung (7) und der Hydropumpeneinheit (3) eine Spülvorrichtung (48) mit der ersten Arbeitsleitung (8) verbunden ist.

## Claims

1. A hydrostatic travel drive with a hydro-pump unit (3) and at least one hydro-motor unit (14) and a second hydro-motor unit (15), which are connected in parallel to the hydro-pump unit (3) within a closed hydraulic circuit, wherein a flow divider (80) is disposed between the hydro-motor units (14, 15) and the hydro-pump unit (3),
wherein a pressure-limiting valve (23) is connected to a the first operating line (7) connecting the flow divider (80) to the hydro-pump unit (3),
**characterised in that**
an opening pressure of the pressure-limiting valve (23) is adjustable dependent upon a control signal.

2. The hydrostatic travel drive according to claim 1,
**characterised in that**
the pressure-limiting valve (23) is disposed in a short-circuit line (22) connecting the first operating line (7) to a second operating line (8).

3. The hydrostatic the travel drive according to claim 2,
**characterised in that**
a non-return valve (27) opening in the direction towards the second operating line (8) is disposed between the pressure-limiting valve (23) and the second operating line (8).

4. The hydrostatic travel drive according to any one of claims 1 to 3,
**characterised in that**
the flow divider (80) connects a first motor-operating-line branch (9) and a second motor-operating-line branch (10) in each case via a controllable throttle point (28, 29) to the first operating line (7).

5. The hydrostatic travel drive according to claim 4,
**characterised in that**
the throttle points (28, 29) of the flow divider (80) are adjustable in their throttling action dependent upon a further control signal.

6. The hydrostatic travel drive according to any one of claims 1 to 5,
**characterised in that**
the hydro-pump unit (3) is adjustable in its pumping volume, wherein the pumping volume can be adjusted in the direction towards a minimal pumping volume dependent upon a braking signal.

7. The hydrostatic travel drive according to claim 6,
**characterised in that**
the pumping volume of the hydro-pump unit (3) can be adjusted by an adjustment device (31) which can be controlled by an electronic-control device (35).

8. The hydrostatic travel drive according to any one of claims 1 to 7,
**characterised in that**
the first hydro-motor unit (14) and the second hydro-motor unit (15) can be adjusted in their absorption volume via a first motor-adjustment device (32) or respectively a second motor-adjustment device (33), wherein the first motor-adjustment device (32) and the second motor-adjustment device (33) can be controlled by an electronic-control device (35).

9. The hydrostatic travel drive according to any one of claims 1 to 8,
**characterised in that**
a rinsing device (48) is connected to the first operating line (8) between the connection of the pressure-limiting valve (23) to the first operating line (7) and the hydro-pump unit (3).

## Revendications

1. Système d'entraînement de propulsion, hydrostatique, comprenant
une unité de pompe hydraulique (3) et au moins une première unité de moteur hydraulique (14) et une deuxième unité de moteur hydraulique (15), qui sont reliées en parallèle à l'unité de pompe hydraulique (3) en formant un circuit fermé,
système dans lequel entre les unités de moteur hydraulique (14, 15) et l'unité de pompe hydraulique (3) est agencé un diviseur de débit (80), et dans lequel une vanne de limitation de pression (23) est reliée à une première conduite de travail (7) reliant le diviseur de débit (80) à l'unité de pompe hydraulique (3),
**caractérisé**
**en ce qu'**une pression d'ouverture de la vanne de limitation de pression (23) peut être réglée en fonction d'un signal de commande.

2. Système d'entraînement de propulsion, hydrostatique, selon la revendication 1,
**caractérisé**
**en ce que** la vanne de limitation de pression (23) est agencée dans une conduite de court-circuit (22) reliant la première conduite de travail (7) à une deuxième conduite de travail (8).

3. Système d'entraînement de propulsion, hydrostatique, selon la revendication 2,
**caractérisé**
**en ce qu'**entre la vanne de limitation de pression (23) et la deuxième conduite de travail (8), est agencée une soupape anti-retour (27) qui ouvre en direction de la deuxième conduite de travail (8).

4. Système d'entraînement de propulsion, hydrostatique, selon l'une des revendications 1 à 3,
**caractérisé**
**en ce que** le diviseur de débit (80) relie une première branche de conduite de travail de moteur (9) et une deuxième branche de conduite de travail de moteur (10), à la première conduite de travail (7), par l'intermédiaire, respectivement, d'un point d'étranglement (28, 29) réglable.

5. Système d'entraînement de propulsion, hydrostatique, selon la revendication 4,
**caractérisé**
**en ce que** les points d'étranglement (28, 29) du diviseur de débit (80) peuvent être réglés, quant à leur effet d'étranglement, en fonction d'un autre signal de commande.

6. Système d'entraînement de propulsion, hydrostatique, selon l'une des revendications 1 à 5,
**caractérisé**
**en ce que** l'unité de pompe hydraulique (3) peut être réglée quant à son volume refoulé par tour ou volume refoulé, le volume refoulé étant réglable, en fonction d'un signal de freinage, dans le sens d'un volume refoulé minimal.

7. Système d'entraînement de propulsion, hydrostatique, selon la revendication 6,
**caractérisé**
**en ce que** le volume refoulé de l'unité de pompe hydraulique (3) peut être réglé par un dispositif de réglage (31) qui peut être commandé par un appareil de commande électronique (35).

8. Système d'entraînement de propulsion, hydrostatique, selon l'une des revendications 1 à 7,
**caractérisé**
**en ce que** la première unité de moteur hydraulique (14) et la deuxième unité de moteur hydraulique (15) peuvent être réglées, quant à leur volume absorbé par tour ou volume absorbé, respectivement par l'intermédiaire d'un premier dispositif de réglage de moteur (32) et d'un deuxième dispositif de réglage de moteur (33), le premier dispositif de réglage de moteur (32) et le deuxième dispositif de réglage de moteur (33) pouvant être commandés par un appareil de commande électronique (35).

9. Système d'entraînement de propulsion, hydrostatique, selon l'une des revendications 1 à 8,
**caractérisé**
**en ce qu'**entre la liaison de la vanne de limitation de pression (23) avec la première conduite de travail (7) et l'unité de pompe hydraulique (3), un dispositif de vidange (48) est relié à la première conduite de travail (7).
